# EUROPÄISCHE PATENTANMELDUNG

(11) **EP 4 144 557 A1**
(43) Veröffentlichungstag der Anmeldung: **08.03.2023**
(21) Anmeldenummer: 22193082.9
(22) Anmeldetag: 31.08.2022
(51) Int. Cl.: B60K 17/346, B60K 1/02, F16H 3/66

(54) **ANTRIEBSEINHEIT FÜR EIN ELEKTROFAHRZEUG**

(30) Priorität: 01.09.2021 DE 102021209593
(71) Anmelder: ZF Friedrichshafen AG, 88046 Friedrichshafen (DE)
(72) Erfinder: Pfeffer, Andreas, 94234 Viechtach (DE); Mühlbauer, Alexander, 94575 Windorf (DE); Reitinger, Franz, 4092 Esternberg (AT); Brilka, Tobias, 94547 Iggensbach (DE)

(57) **Zusammenfassung**

Die Erfindung betrifft eine Antriebseinheit (7) für ein Elektrofahrzeug, umfassend mindestens eine Elektromaschine, ein Mehrganggetriebe und eine Verteilereinrichtung, wobei ein jeweiliger Rotor der mindestens einen Elektromaschine mit je einer zugehörigen Eingangswelle des Mehrganggetriebes verbunden ist. Das Mehrganggetriebe steht ausgangsseitig mit der Verteilereinrichtung in Verbindung, wobei in dem Mehrganggetriebe unterschiedliche Übersetzungsverhältnisse schaltbar sind. Zudem kann über die Verteilereinrichtung eine in die Verteilereinrichtung eingeleitete Antriebsleistung auf zumindest zwei Abtriebe (9, 10) der Verteilereinrichtung verteilt werden. Um eine kompakt bauende Antriebseinheit (7) für ein Elektrofahrzeug mit permanentem Allrad oder zuschaltbaren Allrad zu realisieren, dient die Verteilereinrichtung einer Längsverteilung der eingeleiteten Antriebsleistung dient, indem die Abtriebe (9, 10) der Verteilereinrichtung jeweils für die Koppelung mit je einer Antriebsachse (3, 4) des Elektrofahrzeugs vorgesehen sind.

## Beschreibung

Die Erfindung betrifft eine Antriebseinheit für ein Elektrofahrzeug, umfassend mindestens eine Elektromaschine, ein Mehrganggetriebe und eine Verteilereinrichtung, wobei ein jeweiliger Rotor der mindestens einen Elektromaschine mit je einer zugehörigen Eingangswelle des Mehrganggetriebes verbunden ist, wobei das Mehrganggetriebe ausgangsseitig mit der Verteilereinrichtung in Verbindung steht, wobei in dem Mehrganggetriebe unterschiedliche Übersetzungsverhältnisse schaltbar sind, und wobei über die Verteilereinrichtung eine in die Verteilereinrichtung eingeleitete Antriebsleistung auf zwei Abtriebe der Verteilereinrichtung verteilbar ist. Des Weiteren betrifft die Erfindung einen Antriebsstrang für ein Elektrofahrzeug mit einer vorgenannten Antriebseinheit sowie ein Elektrofahrzeug.

Bei Elektrofahrzeugen sind Antriebseinheiten bekannt, die sich häufig aus mindestens einer Elektromaschine und einem nachgeschalteten Mehrganggetriebe zusammensetzen. Dabei können in dem jeweiligen Mehrganggetriebe unterschiedliche Gänge geschaltet werden, um eine Antriebsbewegung der mindestens einen Elektromaschine mit unterschiedlichen Übersetzungsverhältnissen zu übersetzen. Teil einer derartigen Antriebseinheit kann dabei auch eine Verteilereinrichtung sein, über die eine Verteilung einer durch die mindestens eine Elektromaschine hervorgerufenen und durch das nachgeschaltete Mehrganggetriebe übersetzten Antriebsbewegung auf mehrere Abtriebe vorgenommen wird.

So geht aus der DE 10 2019 202 994 A1 eine Antriebseinheit hervor, welche für die Anwendung bei einem Elektrofahrzeug vorgesehen ist und sich aus einer Elektromaschine und einem Mehrganggetriebe zusammensetzt. Das Mehrganggetriebe umfasst dabei zwei Planetenradsätze und mehrere Schaltelemente, durch deren selektive Betätigung unterschiedliche Übersetzungsverhältnisse zwischen einer Ausgangswelle des Mehrganggetriebes und einer Eingangswelle des Mehrganggetriebes geschaltet werden können, an der ein Rotor der Elektromaschine angebunden ist. Neben Varianten, bei welchen die Antriebseinheit für einen Einzelradantrieb einer Antriebsachse des Elektrofahrzeuges konzipiert ist, ist bei einer Variante der DE 10 2019 202 994 A1 dem Mehrganggetriebe eine Verteilereinheit nachgeschaltet, über welche eine Verteilung einer Antriebsbewegung auf Antriebsräder einer Antriebsachse dargestellt werden kann. Dabei ist die Verteilereinheit als Achsdifferential ausgebildet, über welches eine Querverteilung stattfindet.

Ausgehend vom vorstehend beschriebenen Stand der Technik ist es nun die Aufgabe der vorliegenden Erfindung, eine geeignete Antriebseinheit für ein Elektrofahrzeug mit permanentem Allradantrieb oder zuschaltbarem Allradantrieb zu realisieren.

Diese Aufgabe wird ausgehend vom Oberbegriff des Anspruchs 1 in Verbindung mit dessen kennzeichnenden Merkmalen gelöst. Die hierauf folgenden, abhängigen Ansprüche geben jeweils vorteilhafte Weiterbildungen der Erfindung wieder. Ein Antriebsstrang für ein Elektrofahrzeug, welcher eine erfindungsgemäße Antriebseinheit aufweist, ist zudem Gegenstand der Ansprüche 12 und 13. Zudem betrifft Anspruch 14 ein Elektrofahrzeug mit einem vorgenannten Antriebsstrang.

Gemäß der Erfindung umfasst eine Antriebseinheit für ein Elektrofahrzeug mindestens eine Elektromaschine, ein Mehrganggetriebe und eine Verteilereinrichtung. Dabei ist ein jeweiliger Rotor der mindestens einen Elektromaschine mit je einer zugehörigen Eingangswelle des Mehrganggetriebes verbunden, wobei das Mehrganggetriebe ausgangsseitig mit der Verteilereinrichtung in Verbindung steht. In dem Mehrganggetriebe können unterschiedliche Übersetzungsverhältnisse geschaltet werden, während über die Verteilereinrichtung eine in die Verteilereinrichtung eingeleitete Antriebsleistung auf zumindest zwei Abtriebe der Verteilereinrichtung verteilbar ist.

Die mindestens eine Elektromaschine der erfindungsgemäßen Antriebseinheit setzt sich auf dem Fachmann prinzipiell bekannte Art und Weise bevorzugt aus je einem Stator und je einem Rotor zusammen, von welchen der jeweilige Stator permanent festgesetzt ist. Letzteres ist dabei insbesondere dadurch vollzogen, dass der jeweilige Stator drehfest mit einer stillstehenden Komponente der Antriebseinheit verbunden ist, bei welcher es sich bevorzugt um ein Gehäuse, einen Gehäuseteil oder eine drehfest mit dem Gehäuse verbundene Komponente der Antriebseinheit handelt. Die mindestens eine Elektromaschine kann zudem im Sinne der Erfindung insbesondere einerseits als Elektromotor sowie andererseits als Generator betrieben werden, wobei die Elektromaschine im elektromotorischen Betrieb durch Stromversorgung selbst eine Antriebsbewegung hervorruft, während sie bei Antrieb in ihrem generatorischen Betrieb Strom erzeugt.

Das Mehrganggetriebe der Antriebseinheit weist bevorzugt neben einer Ausgangswelle pro Elektromaschine je eine Eingangswelle auf, d.h. dass jeder Elektromaschine der Antriebseinheit je eine Eingangswelle des Mehrganggetriebes zugeordnet ist. An der Ausgangswelle steht das Mehrganggetriebe insbesondere mit der nachgeschalteten Verteilereinrichtung in Verbindung. In dem Mehrganggetriebe können unterschiedliche Übersetzungsverhältnisse geschaltet werden, wobei dies insbesondere durch Darstellung unterschiedlicher Kraftflussführungen innerhalb des Mehrganggetriebes realisiert wird. Für die Darstellung unterschiedlicher Übersetzungsverhältnisse umfasst das Mehrganggetriebe bevorzugt mehrere unterschiedliche Übersetzungsstufen, welche als Stirnradstufen und/oder als Planetenradsätze vorliegen können. Weiter bevorzugt verfügt das Mehrganggetriebe über mehrere Schaltelemente, durch deren selektive Betätigung die unterschiedlichen Übersetzungsverhältnissen geschaltet werden können. Bei den Schaltelementen kann es sich dabei im Einzelnen prinzipiell um ein kraftschlüssiges Schaltelement, wie insbesondere ein Lamellenschaltelement, oder auch um ein formschlüssiges Schaltelement, wie beispielsweise ein Klauenschaltelement oder eine Sperrsynchronisation, handeln.

Die dem Mehrganggetriebe abtriebsseitig nachgeschaltete Verteilereinrichtung ist bei der erfindungsgemäßen Antriebseinheit dafür vorgesehen, eine abtriebsseitig des Mehrganggetriebes zur Verfügung gestellte Antriebsleistung auf zwei Abtriebe zu verteilen. Hierzu ist die Verteilereinrichtung antriebseitig bevorzugt an einer Antriebswelle mit einer Ausgangswelle des vorgeschalteten Mehrganggetriebes verbunden. Die Abtriebe der Verteilereinrichtung sind dabei insbesondere jeweils an je einem Ende je einer Abtriebswelle der Verteilereinrichtung ausgestaltet und definieren bevorzugt jeweils Anschlussstellen, an denen im verbauten Zustand der Antriebseinheit nachfolgende Komponenten in einem Kraftfahrzeugantriebsstrang angebunden sind. Die Verteilereinrichtung verfügt dabei über mindestens zwei Abtriebe, wobei dabei bevorzugt genau zwei Abtriebe vorgesehen sind.

Die Erfindung umfasst nun die technische Lehre, dass die Verteilereinrichtung einer Längsverteilung der eingeleiteten Antriebsleistung dient, indem die Abtriebe der Verteilereinrichtung jeweils für die Koppelung mit je einer Antriebsachse des Elektrofahrzeugs vorgesehen sind. Mit anderen Worten ist die Verteilereinrichtung der erfindungsgemäßen Antriebseinheit also dazu ausgebildet, im Sinne einer Längsverteilung eine Verteilung einer eingeleiteten Antriebsleistung auf mehrere Antriebsachsen eines Elektrofahrzeugs vorzunehmen. Dazu dienen die Abtriebe der Verteilereinrichtung in einem verbauten Zustand der erfindungsgemäßen Antriebseinheit jeweils einer Verbindung mit je einer Antriebsachse des Elektrofahrzeugs. Dementsprechend ist in dem verbauten Zustand an jedem Abtrieb der Verteilereinrichtung je eine zugehörige Antriebsachse des Elektrofahrzeugs trieblich angebunden.

Eine derartige Ausgestaltung einer Antriebseinheit hat dabei den Vorteil, dass diese Antriebseinheit damit als zentraler Antrieb für mehrere Antriebsachsen eines Elektrofahrzeugs zur Anwendung kommen kann, was somit auch eine kompakte Ausgestaltung eines Antriebsstranges des Elektrofahrzeugs ermöglicht. Insofern kann bei einem Elektrofahrzeug mit Allradantrieb oder zuschaltbaren Allradantrieb ein kompakt bauendes Antriebskonzept verwirklicht werden.

Wesentlich für die erfindungsgemäße Antriebseinheit ist dabei, dass die Verteilereinrichtung der erfindungsgemäßen Antriebseinheit dazu konzipiert ist, eine Verteilung einer Antriebsleistung auf mehrere Antriebsachsen entweder permanent oder bei entsprechender Betätigung vorzunehmen. Somit ist die Verteilereinheit als Längsverteilungseinheit ausgebildet.

Hingegen ist die Antriebseinheit der DE 10 2019 202 994 A1 für die Anwendung bei einer einzelnen Antriebsachse eines Elektrofahrzeugs vorgesehen und dient hier entweder der Realisierung eines Einzelradantriebs oder einem Antrieb von Antriebsrädern der zugehörigen Antriebsachse.

Entsprechend einer Ausführungsform der Erfindung sind die mindestens eine Elektromaschine, das Mehrganggetriebe und die Verteilereinrichtung gemeinsam in einem Gehäuse aufgenommen. Hierdurch kann die Antriebseinheit als kompakte Baueinheit realisiert werden.

Gemäß einer weiteren Ausgestaltungsmöglichkeit der Erfindung sind die mindestens eine Elektromaschine, das Mehrganggetriebe und die Verteilereinrichtung axial nebeneinanderliegend angeordnet. Besonders bevorzugt ist dabei das Mehrganggetriebe axial zwischen der mindestens einen Elektromaschine und der Verteilereinrichtung platziert, wobei im Rahmen der Erfindung axial auch eine anderweitige Anordnung der Komponenten der erfindungsgemäßen Antriebseinheit getroffen sein kann. So kann bei mehreren Elektromaschinen der Antriebseinheit auch ein Aufbau gewählt sein, bei welchem das Mehrganggetriebe und die Verteilereinrichtung axial zwischen Elektromaschinen angeordnet sind. In Weiterbildung der vorgenannten Ausführungsform liegen die mindestens eine Elektromaschine, das Mehrganggetriebe und die Verteilereinrichtung zudem bevorzugt koaxial zueinander.

Im Rahmen der Erfindung bedeutet "axial" eine Orientierung in Richtung einer Längsmittelachse der erfindungsgemäßen Antriebseinheit, wobei parallel zu dieser Längsmittelachse bevorzugt auch Wellen der Antriebseinheit mit ihren Rotationsachsen orientiert sind. Zudem ist mit "radial" eine Orientierung in Durchmesserrichtung einer jeweiligen Komponente zu verstehen.

Alternativ zu der vorgenannten Ausgestaltungsmöglichkeit sind die mindestens eine Elektromaschine, das Mehrganggetriebe und die Verteilereinrichtung koaxial zueinander platziert, wobei das Mehrganggetriebe und/oder die Verteilereinrichtung axial auf Höhe der mindestens einen Elektromaschine sowie radial innenliegend zu dieser angeordnet ist. Hierdurch kann ein besonders kompakter Aufbau der erfindungsgemäßen Antriebseinheit realisiert werden. Dabei bedeutet eine koaxiale Anordnung insbesondere, dass das Mehrganggetriebe mit seiner je zugehörigen Eingangswelle und seiner Ausgangswelle bzw. die Verteilereinrichtung mit ihrer Antriebswelle und ihren Abtrieben koaxial zu einer Rotationsachse der mindestens einen Elektromaschine platziert ist.

In Weiterbildung der Erfindung weist die Verteilereinrichtung ein Differentialgetriebe auf, welches aufgrund der über die Verteilereinrichtung darzustellenden Längsverteilung als Längsdifferential konzipiert ist. In vorteilhafter Weise kann über ein Differentialgetriebe eine Längsverteilung einer Antriebsleistung auf mehrere Antriebsachsen eines Elektrofahrzeugs stattfinden und dabei Drehzahlunterschiede zwischen den Abtrieben der Verteilereinrichtung ermöglicht werden. Die Verteilereinrichtung kann dabei im Rahmen der Erfindung zum einen als Kegelraddifferential ausgeführt sein, wodurch eine gleichmäßige Momentenaufteilung auf die Abtriebe der Verteilereinrichtung vollzogen wird. Alternativ kommt aber auch insbesondere eine Ausgestaltung als Planetendifferential im Rahmen der Erfindung in Betracht, wodurch eine ungleichmäßige Momentenaufteilung realisierbar ist. Ebenso kann die Verteilereinrichtung im Rahmen der Erfindung als Stirnrad-Differentialgetriebe oder auch als Schraubenrad-Differentialgetriebe ausgeführt sein. Das jeweilige Differentialgetriebe kann dabei zudem jeweils mit je einer Differentialsperre ausgestattet sein, bei deren Betätigung gleiche Drehzahlen der Abtriebe der Verteilereinrichtung erzwungen werden.

Alternativ zu der vorgenannten Variante ist bei der Verteilereinrichtung ein erster Abtrieb permanent mit einer Eingangsseite der Verteilereinrichtung gekoppelt, wohingegen ein zweiter Abtrieb über eine Kupplung starr mit dem ersten Abtrieb verbunden werden kann. Insofern ist in diesem Fall der erste Abtrieb permanent mit der Antriebswelle und damit auch dem vorgeschalteten Mehrganggetriebe gekoppelt, während der zweite Abtrieb erst durch Betätigen der Kupplung zugeschaltet wird, wobei der zweite Abschnitt dann unter gleicher Drehzahl wie der erste Abtrieb aufgrund der starren Verbindung rotiert. Diese Ausgestaltung eignet sich dabei für die Anwendung bei einem Elektrofahrzeug mit zuschaltbarem Allradantrieb, indem der zweite Abtrieb erst durch Betätigung der Kupplung mit dem ersten Abtrieb verbunden und damit auch erst dann eine Kraftflussführung zu der im verbauten Zustand der Antriebseinheit an dem zweiten Abtrieb angebundenen Antriebsachse verwirklicht wird.

Bei der vorgenannten Ausführungsform kann der erste Abtrieb starr mit der Eingangsseite der Verteilereinrichtung verbunden sein, so dass die Antriebswelle und der erste Abtrieb stets mit derselben Drehzahl rotieren. Alternativ dazu ist es im Rahmen der Erfindung aber auch denkbar, dass zwischen der Eingangsseite und dem ersten Abtrieb mindestens eine Übersetzungsstufe der Verteilereinrichtung vorgesehen ist, wodurch eine zusätzliche Übersetzung im Bereich der Verteilereinrichtung verwirklicht wird. Diese Übersetzungsstufe kann dabei als Stirnradstufe oder auch als Planetenstufe ausgeführt sein. Die Eingangsseite ist bevorzugt durch eine Antriebswelle der Verteilereinrichtung gebildet, wobei die Antriebswelle weiter bevorzugt auch eine Ausgangswelle des vorgeschalteten Mehrganggetriebes darstellt.

Entsprechend einer Ausgestaltungsmöglichkeit der Erfindung sind zwei Elektromaschinen vorgesehen, wobei ein Rotor der ersten Elektromaschine mit einer ersten Eingangswelle des Mehrganggetriebes verbunden ist und ein Rotor der zweiten Elektromaschine mit einer zweiten Eingangswelle des Mehrganggetriebes in Verbindung steht. In vorteilhafter Weise kann hierdurch eine Antriebseinheit verwirklicht werden, bei welcher Antriebsleistungen von zwei Elektromaschinen über das nachgeschaltete Mehrganggetriebe miteinander kombiniert werden können. So können die Elektromaschinen von ihren Antriebsleistungen her unterschiedlich ausgeführt sein, wobei in einem Betrieb mit niedriger, notwendiger Antriebsleistung die kleinere Elektromaschine in den Kraftfluss eingebunden wird, bei einer höheren, notwendigen Antriebsleistung eine Einbindung der größeren Elektromaschine vorgenommen wird und bei einer höchsten, notwendigen Antriebsleistung beide Elektromaschinen gemeinsam in den Kraftfluss eingebunden werden. Insgesamt kann hierdurch eine effizient arbeitende Antriebseinheit realisiert werden.

Gemäß einer weiteren Ausführungsform der Erfindung weist das Mehrganggetriebe mehrere Planetenradsätze auf, die jeweils je ein erstes Element, je ein zweites Element und je ein drittes Element in Form je eines Sonnenrades, je eines Planetenstegs und je eines Hohlrades aufweisen. Zudem sind mehrere Schaltelemente vorgesehen, durch deren selektive Betätigung die unterschiedlichen Übersetzungsverhältnisse zwischen der je zugehörigen Eingangswelle und der Ausgangswelle geschaltet werden können. Die Verwendung von Planetenradsätzen ermöglicht einen besonders kompakten Aufbau des Mehrganggetriebes, wobei sich zudem unterschiedliche Übersetzungsverhältnisse darstellen lassen.

Die Planetenradsätze des Mehrganggetriebes der vorstehend beschriebenen Ausführungsform sind bevorzugt jeweils als Minus-Planetensatz ausgeführt, bei welchem der jeweilige Planetensteg mindestens ein Planetenrad drehbar gelagert führt, welches sowohl mit dem jeweiligen Sonnenrad, als auch dem jeweiligen Hohlrad des Planetenradsatzes jeweils im Zahneingriff steht. Besonders bevorzugt verfügt der einzelne Planetenradsatz aber über mehrere Planetenräder, die jeweils in dem jeweiligen Planetensteg drehbar gelagert aufgenommen sind. Alternativ dazu können aber einzelne oder auch mehrere der Planetenradsätze jeweils als Plus-Planetensatz gestaltet sein, bei welchem in dem jeweiligen Planetensteg mindestens ein Planetenradpaar drehbar gelagert ist. Von den Planetenrädern des mindestens einen Planetenradpaares steht dann ein Planetenrad mit dem Sonnenrad und ein Planetenrad mit dem Hohlrad im Zahneingriff, wobei die Planetenräder des Planetenradpaares zudem untereinander kämmen.

Die Schaltelemente des Mehrganggetriebes sind besonders bevorzugt jeweils als formschlüssige Schaltelemente ausgebildet, wobei sie weiter bevorzugt jeweils als unsynchronisierte Klauenschaltelemente vorliegen. Einzelne Schaltelemente können aber auch als Sperrsynchronisation oder als kraftschlüssige Schaltelemente ausgestaltet sein, insbesondere als Lamellenschaltelemente.

In Weiterbildung der beiden vorstehend beschriebenen Ausführungsformen ist die zweite Eingangswelle des Mehrganggetriebes drehfest mit dem ersten Element eines ersten Planetenradsatzes verbunden, während das dritte Element des ersten Planetenradsatzes festgesetzt ist. Des Weiteren stehen das zweite Element des ersten Planetenradsatzes und das dritte Element eines zweiten Planetenradsatzes drehfest miteinander in Verbindung. Ferner ist eine Ausgangswelle des Mehrganggetriebes drehfest mit dem zweiten Element des zweiten Planetenradsatzes verbunden, während die erste Eingangswelle über ein erstes Schaltelement drehfest mit dem ersten Element des zweiten Planetenradsatzes verbunden werden kann. Darüber hinaus kann die erste Eingangswelle noch mittels eines zweiten Schaltelements drehfest mit der zweiten Eingangswelle in Verbindung gebracht werden. Das erste Element des zweiten Planetenradsatzes kann über ein drittes Schaltelement festgesetzt sowie mittels eines vierten Schaltelements drehfest mit der zweiten Eingangswelle verbunden werden. Schließlich können noch zwei der Elemente des zweiten Planetenradsatzes über ein fünftes Schaltelement drehfest miteinander in Verbindung gebracht werden.

Hierdurch lässt sich ein kompakt bauendes Mehrganggetriebe verwirklichen, mittels welchem die beiden Elektromaschinen der Antriebseinheit zudem auf unterschiedliche Weisen mit unterschiedlichen Übersetzungsverhältnissen in einen Kraftfluss eingebunden werden können. So kann die an der zweiten Eingangswelle angebundene, zweite Elektromaschine alleine durch Schalten des dritten Schaltelements, des vierten Schaltelements und auch des fünften Schaltelements jeweils mit der Ausgangswelle gekoppelt werden, wobei hierbei jeweils unterschiedliche Übersetzungsverhältnisse dargestellt werden. Wird jeweils gleichzeitig dazu das zweite Schaltelement betätigt, so können auch beide Elektromaschinen gemeinsam in den Kraftfluss eingebunden werden. Hierdurch kann auch ein alleiniger Antrieb über die erste Elektromaschine durch drehfeste Verbindung der ersten Eingangswelle mit der zweiten Eingangswelle realisiert werden, wobei dabei die zweite Elektromaschine stets an der zweiten Eingangswelle mitgeschleppt wird.

Zudem kann durch alleiniges Betätigen des zweiten Schaltelements eine Überlagerung von Antriebsbewegungen der Elektromaschinen an dem zweiten Planetenradsatz erreicht werden. Werden dann zusätzlich zum zweiten Schaltelement entweder das vierte Schaltelement oder das fünfte Schaltelement in einen jeweils betätigten Zustand überführt, so kann auch ein alleiniger Antrieb über die erste Elektromaschine dargestellt werden, wobei dabei allerdings die zweite Elektromaschine an der zweiten Eingangswelle stets mitgeschleppt wird. Insgesamt lassen sich durch einen generatorischen oder elektromotorischen Betrieb der ersten Elektromaschine und einen generatorischen oder elektromotorischen Betrieb der zweiten Elektromaschine unterschiedliche Betriebsmodi über die Antriebseinheit darstellen.

Besonders bevorzugt handelt es sich bei dem jeweiligen ersten Element des jeweiligen Planetenradsatzes um das jeweilige Sonnenrad, während das jeweilige, zweite Element des jeweiligen Planetenradsatzes bei Ausführung des Planetenradsatzes als Minus-Planetensatz als Planetensteg sowie bei Ausführung des Planetenradsatzes als Plus-Planetensatz als Hohlrad ausgeführt ist. Schließlich ist das jeweilige, dritte Element des jeweiligen Planetenradsatzes bei Ausführung des Planetenradsatzes als Minus-Planetensatz als Hohlrad sowie bei Ausführung des Planetenradsatzes als Plus-Planetensatz als Planetensteg gestaltet.

Sind zudem zumindest einzelne der Schaltelemente des Mehrganggetriebes jeweils als unsynchronisierte Klauenschaltelemente ausgeführt, so kann für ein Öffnen bzw. für ein Schließen des jeweiligen, unsynchronisierten Schaltelements ein Synchronisieren von Drehzahlen an dem jeweiligen Schaltelement durch entsprechenden Betrieb einer oder beider Elektromaschinen herbeigeführt werden.

Bevorzugt sind bei der vorgenannten Ausführungsform das erste Schaltelement und das zweite Schaltelement zu einer Schalteinrichtung zusammengefasst, wobei diese Schalteinrichtung dabei ein Betätigungseinrichtung aufweist, über welches zum einen das erste Schaltelement sowie zum anderen das zweite Schaltelement in einen jeweils betätigten Zustand überführt werden kann. Alternativ, bevorzugt aber ergänzend hierzu sind das dritte Schaltelement, das vierte Schaltelement und das fünfte Schaltelement zu einer Schalteinrichtung zusammengefasst, wobei diese Schalteinrichtung ein Betätigungseinrichtung aufweist, über welches das dritte Schaltelement, das vierte Schaltelement oder das fünfte Schaltelement in einen jeweils betätigten Zustand überführbar ist. Das Zusammenfassen von Schaltelementen zu Schalteinrichtungen hat dabei den Vorteil, dass eine Betätigung der Schaltelemente mit einer niedrigeren Anzahl an Betätigungseinrichtungen vorgenommen werden kann. Besonders bevorzugt sind die beiden vorgenannten Varianten gemeinsam verwirklicht, so dass die insgesamt fünf Schaltelemente über nur zwei Betätigungseinrichtungen betätigt werden können.

Gegenstand der Erfindung ist zudem ein Antriebsstrang für ein Elektrofahrzeug, welcher eine Antriebseinheit nach einer oder mehrere der vorgenannten Varianten aufweist. In vorteilhafter Weise kann hierdurch ein besonders kompaktbauender Antriebsstrang für ein Elektrofahrzeug mit Allradantrieb oder zuschaltbarem Allradantrieb verwirklicht werden.

In Weiterbildung eines erfindungsgemäßen Antriebsstranges ist dabei mit dem einen Abtrieb der Verteilereinrichtung der Antriebseinheit mindestens eine antreibbare Vorderachse und mit dem anderen Abtrieb der Verteilereinrichtung der Antriebseinheit mindestens eine antreibbare Hinterachse trieblich verbunden. Besonders bevorzugt ist bei dem Antriebsstrang eine antreibbare Vorderachse und eine antreibbare Hinterachse vorgesehen, wobei die Vorderachse und die Hinterachse jeweils mit dem zugehörigen Abtrieb der Verteilereinrichtung der erfindungsgemäßen Antriebseinheit in Verbindung stehen. Besonders bevorzugt ist eine triebliche Verbindung zwischen einem Abtrieb der Verteilereinrichtung und einer Antriebsachse über eine zwischenliegende Gelenkwelle hergestellt.

Die Erfindung betrifft zudem ein Elektrofahrzeug, bei welchem es sich besonders bevorzugt um ein geländegängiges Nutzfahrzeug handelt. Dabei ist dieses Elektrofahrzeug mit einem Antriebsstrang entsprechend einer oder mehrerer der vorgenannten Ausgestaltungsmöglichkeiten ausgestattet.

Die Erfindung ist nicht auf die angegebene Kombination der Merkmale des Hauptanspruchs oder der hiervon abhängigen Ansprüche beschränkt. Es ergeben sich darüber hinaus Möglichkeiten, einzelne Merkmale, auch soweit sie aus den Ansprüchen, der nachfolgenden Beschreibung bevorzugter Ausführungsformen der Erfindung oder unmittelbar aus den Zeichnungen hervorgehen, miteinander zu kombinieren. Die Bezugnahme der Ansprüche auf die Zeichnungen durch Verwendung von Bezugszeichen soll den Schutzumfang der Ansprüche nicht beschränken.

Vorteilhafte Ausführungsformen der Erfindung, die nachfolgend erläutert werden, sind in den Zeichnungen dargestellt. Es zeigt:
- Fig. 1: eine schematische Darstellung eines Elektrofahrzeugs entsprechend einer bevorzugten Ausführungsform der Erfindung;
- Fig. 2: eine Seitenansicht eines Antriebsstranges des Elektrofahrzeugs aus Fig. 1;
- Fig. 3: eine schematische Darstellung einer Antriebseinheit des Antriebsstranges aus Fig. 2, entsprechend einer ersten Ausgestaltungsmöglichkeit der Erfindung;
- Fig. 4 bis 6: schematische Ansichten möglicher Ausgestaltungen einer Verteilereinrichtung der Antriebseinheit aus Fig. 3; und
- Fig. 7: eine schematische Darstellung einer Antriebseinheit gemäß einer zweiten Ausführungsform der Erfindung.

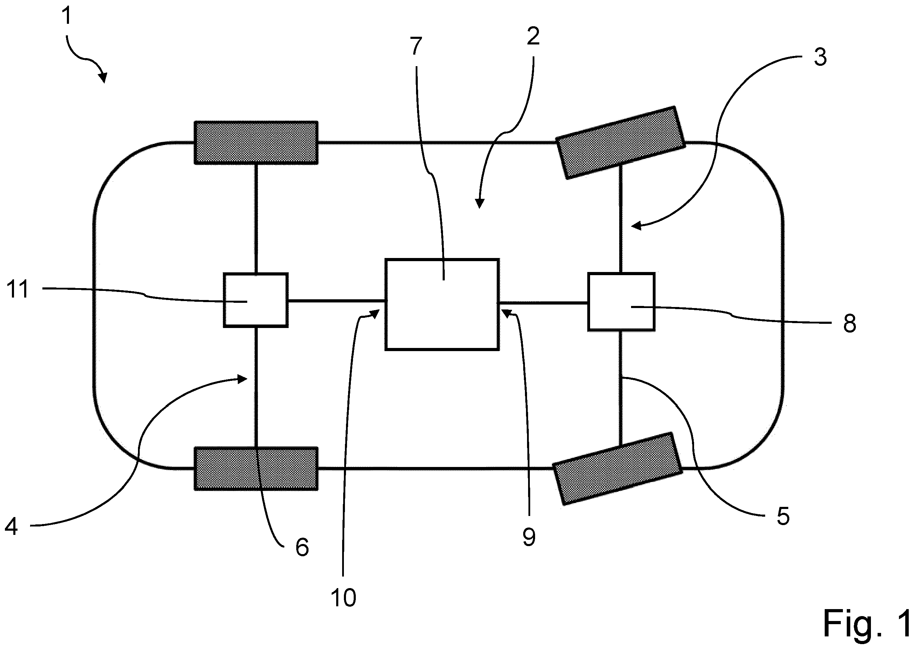

Fig. 1 zeigt eine schematische Ansicht eines Elektrofahrzeugs 1, bei welchem es sich insbesondere um ein geländefähiges Nutzfahrzeug handelt. Das Elektrofahrzeug 1 weist dabei einen Antriebsstrang 2 auf, welcher mit zwei Antriebsachsen 3 und 4 ausgestattet ist. Dabei handelt es sich bei der Antriebsachse 3 um eine lenkbare Vorderachse 5 und bei der Antriebsachse 4 um eine nicht lenkbare Hinterachse 6. Insofern ist das Elektrofahrzeug 1 mit einem permanenten oder zuschaltbaren Allradantrieb ausgestattet.

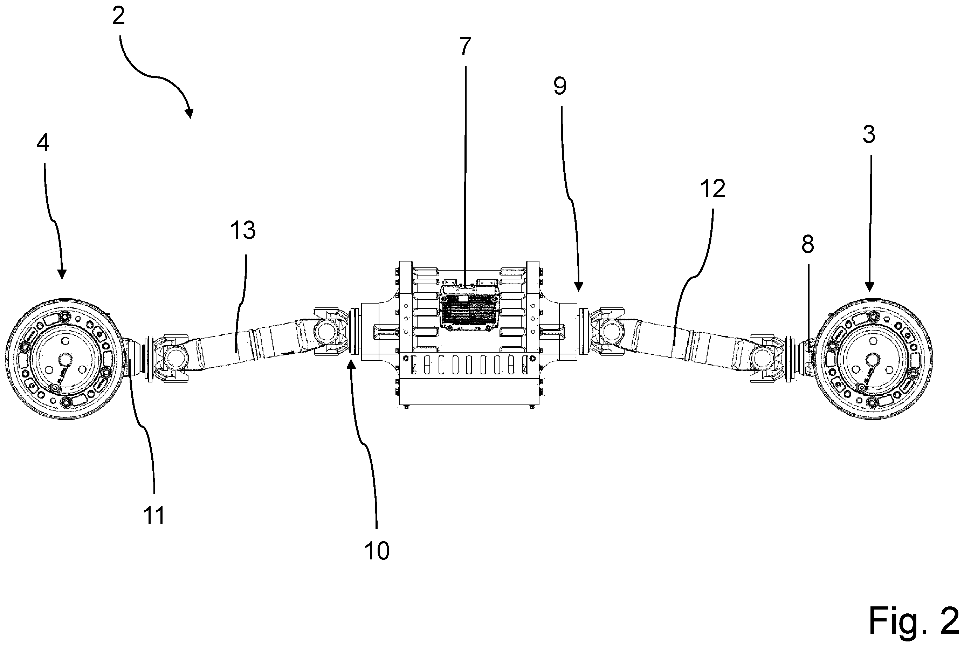

Innerhalb des Antriebsstranges 2 können die beiden Antriebsachsen 3 und 4 über eine Antriebseinheit 7 angetrieben werden, welche in Längsrichtung des Elektrofahrzeugs 1 zwischen den Antriebsachsen 3 und 4 platziert ist. Konkret ist dabei ein Achsdifferential 8 der Antriebsachse 3 an einem Abtrieb 9 der Antriebseinheit 7 angebunden, wobei die Antriebseinheit 7 zudem an einem Abtrieb 10 mit einem Achsdifferential 11 der Antriebsachse 4 in Verbindung steht. Wie in der Seitenansicht des Antriebsstranges 2 in Fig. 2 zu erkennen ist, ist die Verbindung des jeweiligen Abtriebs 9 bzw. 10 mit dem jeweiligen Achsdifferential 8 bzw. 11 der jeweiligen Antriebsachse 3 bzw. 4 über jeweils eine zwischenliegende Gelenkwelle 12 bzw. 13 hergestellt.

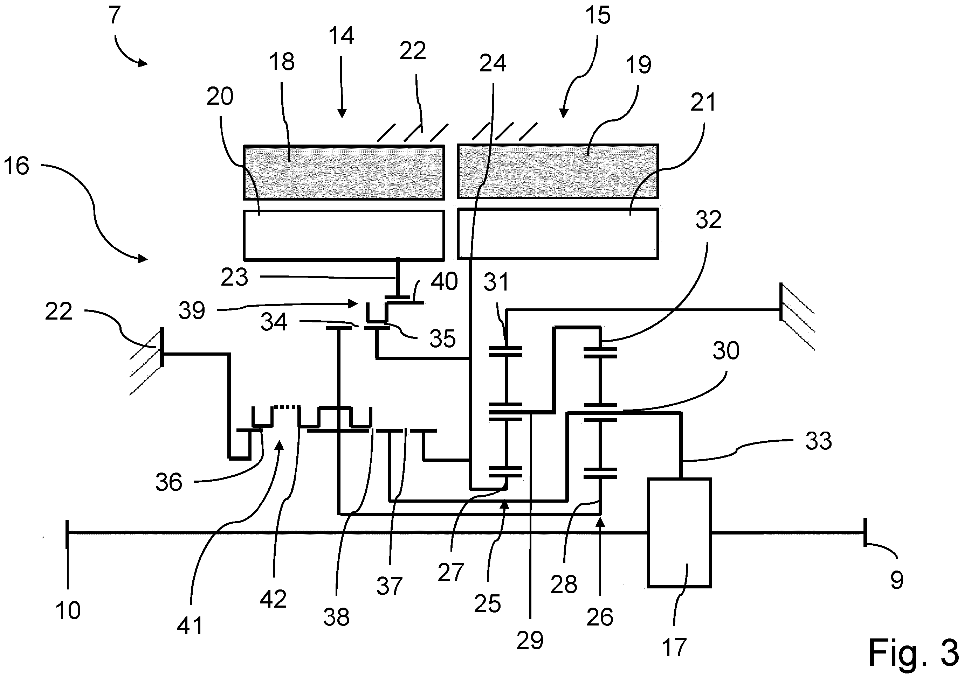

Aus Fig. 3 geht zudem eine schematische Einzeldarstellung der Antriebseinheit 7 hervor, wobei die Antriebseinheit 7 dabei entsprechend einer ersten Ausführungsform der Erfindung gestaltet ist. Dabei umfasst die Antriebseinheit 7 eine erste Elektromaschine 14, eine zweite Elektromaschine 15, ein Mehrganggetriebe 16 sowie eine Verteilereinrichtung 17. Die Elektromaschinen 14 und 15 weisen jeweils je einen Stator 18 bzw. 19 und je einen Rotor 20 bzw. 21 auf, wobei der jeweilige Stator 18 bzw. 19 der jeweiligen Elektromaschine 14 bzw. 15 permanent an einem Gehäuse 22 der Antriebseinheit 7 festgesetzt ist. Die einzelne Elektromaschine 14 bzw. 15 kann zum einen in einem generatorischen Betrieb betrieben werden, in welchem sie bei Antrieb des jeweiligen Rotors 20 bzw. 21 Strom erzeugt. Zum anderen kann die einzelne Elektromaschine 14 bzw. 15 aber auch in einem elektromotorischen Betrieb betrieben werden, wobei dabei bei entsprechender Stromversorgung eine Antriebsbewegung des jeweiligen Rotors 20 bzw. 21 hervorgerufen wird.

Der Rotor 20 der ersten Elektromaschine 14 ist drehfest mit einer ersten Eingangswelle 23 des Mehrganggetriebes 16 verbunden, wobei das Mehrganggetriebe 16 zudem eine zweite Eingangswelle 24 aufweist, die permanent drehfest mit dem Rotor 21 der zweiten Elektromaschine 15 in Verbindung steht. Zudem verfügt das Mehrganggetriebe 16 über zwei Planetenradsätze 25 und 26, welche sich jeweils aus je einem ersten Element 27 bzw. 28, je einem zweiten Element 29 bzw. 30 sowie je einem dritten Element 31 bzw. 32 zusammensetzen.

Vorliegend handelt es sich bei dem jeweiligen ersten Element 27 bzw. 28 des jeweiligen Planetenradsatzes 25 bzw. 26 um ein jeweiliges Sonnenrad, während es sich bei dem jeweiligen zweiten Element 29 bzw. 30 des jeweiligen Planetenradsatzes 25 bzw. 26 um einen jeweiligen Planetensteg handelt. Schließlich liegt noch das jeweilige dritte Element 31 bzw. 32 des jeweiligen Planetenradsatzes 25 bzw. 26 als Hohlrad vor. In dem jeweiligen Planetensteg ist dabei jeweils mindestens ein Planetenrad drehbar gelagert, welches sowohl mit dem jeweiligen Sonnenrad, als auch dem jeweiligen Hohlrad des jeweiligen Planetenradsatzes 25 bzw. 26 im Zahneingriff steht. Insofern sind die beiden Planetenradsätze 25 und 26 als Minus-Planetensätze ausgeführt.

Alternativ dazu könnte einer oder auch beide Planetenradsätze 25 und 26 als Plus-Planetensätze ausgestaltet sein, wobei dann im Vergleich zu der Ausführung als Minus-Planetensatz das jeweilige zweite Element des jeweiligen Planetenradsatzes durch das jeweilige Hohlrad sowie das jeweilige dritte Element des jeweiligen Planetenradsatzes durch den jeweiligen Planetensteg zu bilden ist. Insofern ist in diesem Fall ein Hohlrad- und Planetensteganbindung miteinander zu tauschen, wobei ferner eine Standübersetzung des jeweiligen Planetenradsatzes um Eins zu erhöhen ist. Zudem wäre im Falle einer Ausführung als Plus-Planetensatz in dem jeweiligen Planetensteg mindestens ein Planetenradpaar drehbar gelagert, von dessen Planetenrädern ein Planetenrad mit dem jeweiligen Sonnenrad und ein Planetenrad mit dem jeweiligen Hohlrad im Zahneingriff steht, wobei die Planetenräder des mindestens einen Planetenradpaares zudem untereinander kämmen.

Wie in Fig. 3 zu erkennen ist, ist das erste Element 27 des ersten Planetenradsatzes 25 ständig drehfest mit der zweiten Eingangswelle 24 verbunden, während das zweite Element 29 des ersten Planetenradsatzes 25 und das dritte Element 32 des zweiten Planetenradsatzes 26 permanent drehfest miteinander in Verbindung stehen. Des Weiteren ist das dritte Element 31 des ersten Planetenradsatzes 25 ständig festgesetzt, indem das dritte Element 31 permanent drehfest mit dem Gehäuse 22 der Antriebseinheit 7 in Verbindung steht. Zudem ist das zweite Element 30 des zweiten Planetenradsätzen 20 ständig drehfest mit einer Antriebswelle 33 der Verteilereinrichtung 17 verbunden, über welche eine an der Antriebswelle 33 eingeleitete Antriebsleistung auf die beiden Abtriebe 9 und 10 verteilt wird oder verteilt werden kann. Die Antriebswelle 33 der Verteilereinrichtung 17 bildet dabei gleichzeitig auch eine Ausgangswelle des Mehrganggetriebes 16.

Das Mehrganggetriebe 16 verfügt ferner über insgesamt fünf Schaltelemente 34 bis 38, die jeweils als formschlüssige Schaltelemente in Form unsynchronisierter Klauenschaltelemente vorliegen. Das erste Schaltelement 34 verbindet dabei in einem betätigten Zustand die erste Eingangswelle 23 und damit auch den Rotor 20 der ersten Elektromaschine 14 drehfest mit dem ersten Element 28 des zweiten Planetenradsatzes 26. Hingegen hat ein geschlossener Zustand des zweiten Schaltelements 35 eine drehfeste Verbindung der ersten Eingangswelle 23 mit der zweiten Eingangswelle 24 zur Folge, so dass somit auch die beiden Rotoren 20 und 21 der Elektromaschinen 14 und 15 mit derselben Drehzahl rotieren.

Wird hingegen das dritte Schaltelement 36 in einen geschlossenen Zustand überführt, so wird das erste Element 28 des zweiten Planetenradsatzes 26 am Gehäuse 22 festgesetzt und damit in der Folge an einer Drehbewegung gehindert. Eine Betätigung des vierten Schaltelements 37 zieht eine drehfeste Verbindung der zweiten Eingangswelle 24 mit dem ersten Element 28 des zweiten Planetenradsatzes 26 nach sich, wohingegen das fünfte Schaltelement 38 in seinem geschlossenen Zustand das erste Element 28 und das zweite Element 30 des ersten Planetenradsatzes 26 drehfest miteinander verbindet. Letzteres hat dabei ein Verblocken des zweiten Planetenradsatzes 26 zur Folge.

Durch selektive Betätigung der Schaltelemente 34 bis 38 können die beiden Elektromaschinen 14 und 15 auf unterschiedliche Art und Weisen eingebunden und damit auch unterschiedliche Betriebsmodi dargestellt werden. So kann die zweite Elektromaschine 15 jeweils durch Schließen entweder des dritten Schaltelements 36, des vierten Schaltelements 37 oder des fünften Schaltelements 38 mit der Antriebswelle 33 gekoppelt werden, wobei durch ein jeweils gleichzeitiges Betätigen des zweiten Schaltelements 35 auch eine zusätzliche Einbindung der ersten Elektromaschine 14 über die zweite Eingangswelle 24 darstellbar ist.

Wird hingegen das erste Schaltelement 34 alleine betätigt, so kann an dem zweiten Planetenradsatz 20 ein Überlagern von Antriebsbewegungen der beiden Elektromaschinen 14 und 15 hervorgerufen werden. Zudem kann bei zusätzlicher Betätigung entweder des vierten Schaltelements 37 oder des fünften Schaltelements 38 zum ersten Schaltelement 34 auch ein alleiniger Antrieb über die erste Elektromaschine 14 realisiert werden.

Vorliegend sind das erste Schaltelement 34 und das zweite Schaltelement 35 zu einer Schalteinrichtung 39 zusammengefasst, über deren Betätigungseinrichtung 40 aus einer Neutralstellung heraus entweder das erste Schaltelement 34 oder das zweite Schaltelement 35 in einen jeweils betätigten Zustand überführt werden kann. Ebenso sind auch das dritte Schaltelement 36, das vierte Schaltelement 37 und das fünfte Schaltelement 38 zu einer Schalteinrichtung 41 zusammengefasst, welcher ein Betätigungseinrichtung 42 zugeordnet ist. Diese Betätigungseinrichtung 42 kann dabei bei Bewegung aus einer Neutralstellung heraus je nach Stellung das dritte Schaltelement 36, das vierte Schaltelement 37 oder das fünfte Schaltelement 38 in einen jeweils betätigten Zustand überführen.

Wie aus Fig. 3 hervorgeht, sind die Elektromaschine 14 und 15, das Mehrganggetriebe 16 und auch die Verteilereinrichtung 17 koaxial zueinander angeordnet, wobei das Mehrganggetriebe 16 und auch die Verteilereinrichtung 17 dabei axial im Wesentlichen auf Höhe der beiden Elektromaschinen 14 und 15 sowie radial innen liegend zu diesen platziert sind. Dabei sind die Schalteinrichtungen 39 und 41 axial auf Höhe der ersten Elektromaschine 14 vorgesehen, während die beiden Planetenradsätze 25 und 26 des Mehrganggetriebes 16 und die Verteilereinrichtung 17 axial im Bereich der zweiten Elektromaschine 15 liegen.

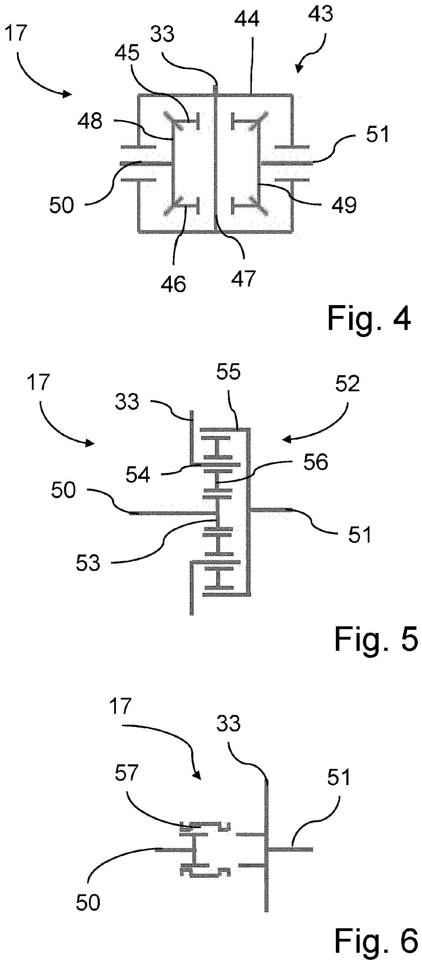

Die Fig. 4 bis 6 zeigen mögliche Ausgestaltungen der Verteilereinrichtung 17, wie sie jeweils bei der Antriebseinheit 7 aus Fig. 3 verwirklicht sein können. Dabei zeigt Fig. 4 eine Ausführung der Verteilereinrichtung 17 mit einem Kegelraddifferential 43, über welches eine an der Antriebswelle 33 eingeleitete Antriebsleistung auf die Abtriebe 9 und 10 und damit auf die hieran angebundenen Antriebsachsen 3 und 4 im Sinne einer Längsverteilung verteilt wird. Dabei ist die Antriebswelle 33 drehfest mit einem Differentialkorb 44 verbunden, in welchem zwei Ausgleichskegelräder 45 und 46 jeweils drehbar auf einem Bolzen 47 gelagert sind. Die Ausgleichskegelräder 45 und 46 kämmen jeweils mit Abtriebskegelrädern 48 und 49, die jeweils drehfest auf je einer Abtriebswelle 50 bzw. 51 platziert sind. Die Abtriebswelle 50 bildet dabei an einem Wellenende den Abtrieb 10 und die Abtriebswelle 51 an einem Wellenende den Abtrieb 9 aus. Über das Kegelraddifferential 43 wird dabei eine gleichmäßige Momentenaufteilung auf die beiden Abtriebe 9 und 10 unter möglichem Ausgleich von Drehzahldifferenzen vorgenommen.

Hingegen zeigt Fig. 5 eine Variante der Verteilereinrichtung 17, bei welcher die Verteilereinrichtung 17 ein Planetendifferential 52 umfasst. Das Planetendifferential 52 setzt sich aus einem Sonnenrad 53, einem Planetensteg 54 und einem Hohlrad 55 zusammen, wobei in dem Planetensteg 54 mehrere Planetenräder 56 drehbar gelagert sind, die jeweils sowohl mit dem Sonnenrad 53, als auch dem Hohlrad 55 im Zahneingriff stehen. Während der Planetensteg 54 drehfest mit der Antriebswelle 33 verbunden ist, steht das Sonnenrad 53 drehfest mit der Abtriebswelle 50 und das Hohlrad 55 drehfest mit der Abtriebswelle 51 in Verbindung. Die Abtriebswellen 50 und 51 bilden dabei an Wellenenden wiederum die Abtriebe 10 bzw. 9 aus. Auch bei dem Planetendifferential 52 findet dabei eine Momentenaufteilung auf die Abtriebe 9 und 10 unter möglichem Ausgleich von Drehzahldifferenzen statt, wobei im Unterschied zu dem Kegelraddifferential 43 hierbei aber eine ungleichmäßige Momentenaufteilung möglich ist.

Bei der in Fig. 6 gezeigten Ausgestaltungsmöglichkeit der Verteilereinrichtung 17 ist die Antriebswelle 33 drehfest mit der Abtriebswelle 51 verbunden, so dass Antriebswelle 33 und Abtriebswelle 51 stets mit derselben Drehzahl rotieren. Die Abtriebswelle 50 kann über eine zwischenliegende Kupplung 57 drehfest mit der Abtriebswelle 51 und damit auch der Antriebswelle 33 verbunden werden, wodurch eine an der Antriebswelle 33 eingeleitete Antriebsleistung gleichmäßig auf die beiden Abtriebswellen 50 und 51 verteilt wird und gleiche Drehzahlen der Abtriebswellen 50 und 51 erzwungen werden. Im Unterschied zu den beiden vorhergehenden Variante nach Fig. 4 oder 5 ist bei der Ausführung der Verteilereinrichtung 17 gemäß Fig. 6 dementsprechend kein permanenter Allradantrieb realisiert, da in einem geöffneten Zustand der Kupplung 57 kein Kraftfluss auf die Abtriebswelle 50 und damit zu dem Abtrieb 10 stattfindet. Vielmehr ist der Allradantrieb im Falle der Ausführung nach Fig. 6 durch Betätigung der Kupplung 57 zuschaltbar.

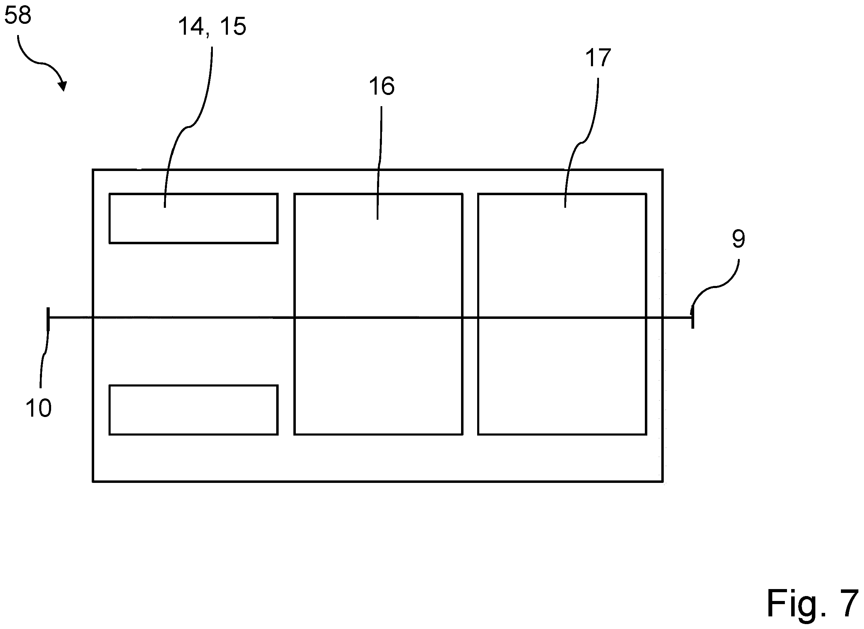

Schließlich zeigt Fig. 7 eine schematische Ansicht einer Antriebseinheit 58, welche entsprechend einer zweiten Ausgestaltungsmöglichkeit der Erfindung realisiert ist und alternativ zu der Antriebseinheit 7 bei dem Antriebsstrang 2 Anwendung finden kann. Im Unterschied zu der Antriebseinheit 7 sind bei der Antriebseinheit 58 die Elektromaschinen 14 und 15, das Mehrganggetriebe 16 und die Verteilereinrichtung 17 axial aufeinanderfolgend angeordnet, wobei die Elektromaschinen 14 und 15, das Mehrganggetriebe 16 und die Verteilereinrichtung 17 dabei koaxial zueinander liegen. Zudem ist das Mehrganggetriebe 16 axial zwischen den Elektromaschinen 14 und 15 einerseits sowie der Verteilereinrichtung 17 andererseits platziert. Ansonsten entspricht die Ausführungsform nach Fig. 7 der Variante nach den Fig. 3 bis 6, so dass auf das hierzu Beschriebene Bezug genommen wird.

Mittels der erfindungsgemäßen Ausgestaltungen kann eine kompaktbauende Antriebseinheit für ein Elektrofahrzeug mit permanentem oder zuschaltbarem Allradantrieb verwirklicht werden.

### Bezugszeichen

- 1: Elektrofahrzeug
- 2: Antriebsstrang
- 3: Antriebsachse
- 4: Antriebsachse
- 5: Vorderachse
- 6: Hinterachse
- 7: Antriebseinheit
- 8: Achsdifferential
- 9: Abtrieb
- 10: Abtrieb
- 11: Achsdifferential
- 12: Gelenkwelle
- 13: Gelenkwelle
- 14: erste Elektromaschine
- 15: zweite Elektromaschine
- 16: Mehrganggetriebe
- 17: Verteilereinrichtung
- 18: Stator
- 19: Stator
- 20: Rotor
- 21: Rotor
- 22: Gehäuse
- 23: erste Eingangswelle
- 24: zweite Eingangswelle
- 25: Erster Planetenradsatz
- 26: Zweiter Planetenradsatz
- 27: erstes Element erster Planetenradsatz
- 28: erstes Element zweiter Planetenradsatz
- 29: zweites Element erster Planetenradsatz
- 30: zweites Element zweiter Planetenradsatz
- 31: drittes Element erster Planetenradsatz
- 32: drittes Element zweiter Planetenradsatz
- 33: Antriebswelle
- 34: Erstes Schaltelement
- 35: Zweites Schaltelement
- 36: Drittes Schaltelement
- 37: Viertes Schaltelement
- 38: Fünftes Schaltelement
- 39: Schalteinrichtung
- 40: Betätigungseinrichtung
- 41: Schalteinrichtung
- 42: Betätigungseinrichtung
- 43: Kegelraddifferential
- 44: Differentialkorb
- 45: Ausgleichskegelrad
- 46: Ausgleichskegelrad
- 47: Bolzen
- 48: Abtriebskegelrad
- 49: Abtriebskegelrad
- 50: Abtriebswelle
- 51: Abtriebswelle
- 52: Planetendifferential
- 53: Sonnenrad
- 54: Planetensteg
- 55: Hohlrad
- 56: Planetenräder
- 57: Kupplung
- 58: Antriebseinheit

## Patentansprüche

1. Antriebseinheit (7; 58) für ein Elektrofahrzeug (1), umfassend mindestens eine Elektromaschine (14, 15), ein Mehrganggetriebe (16) und eine Verteilereinrichtung (17), wobei ein jeweiliger Rotor (20, 21) der mindestens einen Elektromaschine (14, 15) mit je einer zugehörigen Eingangswelle (23, 24) des Mehrganggetriebes (16) verbunden ist, wobei das Mehrganggetriebe (16) ausgangsseitig mit der Verteilereinrichtung (17) in Verbindung steht, wobei in dem Mehrganggetriebe (16) unterschiedliche Übersetzungsverhältnisse schaltbar sind, und wobei über die Verteilereinrichtung (17) eine in die Verteilereinrichtung (17) eingeleitete Antriebsleistung auf zumindest zwei Abtriebe (9, 10) der Verteilereinrichtung (17) verteilbar ist, **dadurch gekennzeichnet, dass** die Verteilereinrichtung (17) einer Längsverteilung der eingeleiteten Antriebsleistung dient, indem die Abtriebe (9, 10) der Verteilereinrichtung (17) jeweils für die Koppelung mit je einer Antriebsachse (3, 4) des Elektrofahrzeugs (1) vorgesehen sind.

2. Antriebseinheit (7; 58) nach Anspruch 1, **dadurch gekennzeichnet, dass** die mindestens eine Elektromaschine (14, 15), das Mehrganggetriebe (16) und die Verteilereinrichtung (17) gemeinsam in einem Gehäuse (22) aufgenommen sind.

3. Antriebseinheit (58) nach Anspruch 1 oder 2, **dadurch gekennzeichnet, dass** die mindestens eine Elektromaschine (14, 15), das Mehrganggetriebe (16) und die Verteilereinrichtung (17) axial nebeneinanderliegend angeordnet sind.

4. Antriebseinheit (7) nach Anspruch 1 oder 2, **dadurch gekennzeichnet, dass** die mindestens eine Elektromaschine (14, 15), das Mehrganggetriebe (16) und die Verteilereinrichtung (17) koaxial zueinander platziert sind, wobei das Mehrganggetriebe (16) und/oder die Verteilereinrichtung (17) axial auf Höhe der mindestens einen Elektromaschine (14, 15) sowie radial innenliegend zu dieser angeordnet ist.

5. Antriebseinheit (7; 58) nach einem der vorhergehenden Ansprüche, **dadurch gekennzeichnet, dass** die Verteilereinrichtung (17) ein Differentialgetriebe aufweist, bevorzugt ein Kegelraddifferential (43) oder ein Planetendifferential (52).

6. Antriebseinheit (7; 58) nach einem der Ansprüche 1 bis 4, **dadurch gekennzeichnet, dass** bei der Verteilereinrichtung (17) ein erster Abtrieb (9) permanent mit einer Eingangsseite der Verteilereinrichtung (17) gekoppelt ist, wohingegen ein zweiter Abtrieb (10) über eine Kupplung (57) starr mit dem ersten Abtrieb (9) verbindbar ist.

7. Antriebseinheit (7; 58) nach einem der vorhergehenden Ansprüche, **dadurch gekennzeichnet, dass** zwei Elektromaschinen (14, 15) vorgesehen sind, wobei ein Rotor (20) der ersten Elektromaschine (14) mit einer ersten Eingangswelle (23) des Mehrganggetriebes (16) verbunden ist und ein Rotor (21) der zweiten Elektromaschine (15) mit einer zweiten Eingangswelle (24) des Mehrganggetriebes (16) in Verbindung steht.

8. Antriebseinheit (7; 58) nach einem der vorhergehenden Ansprüche, **dadurch gekennzeichnet, dass** das Mehrganggetriebe (16) mehrere Planetenradsätze (25, 26) aufweist, die jeweils je ein erstes Element (27, 28), je ein zweites Element (29, 30) und je ein drittes Element (31, 32) in Form je eines Sonnenrades, je eines Planetenstegs und je eines Hohlrades aufweisen, wobei mehrere Schaltelemente (34 bis 38) vorgesehen sind, durch deren selektive Betätigung die unterschiedlichen Übersetzungsverhältnisse zwischen der je zugehörigen Eingangswelle (23, 24) und der Ausgangswelle schaltbar sind.

9. Antriebseinheit (7; 58) nach Anspruch 7 und Anspruch 8, **dadurch gekennzeichnet,**
- **dass** die zweite Eingangswelle (24) drehfest mit dem ersten Element (27) eines ersten Planetenradsatzes (25) verbunden ist,
- **dass** das dritte Element (31) des ersten Planetenradsatzes (25) festgesetzt ist,
- **dass** das zweite Element (29) des ersten Planetenradsatzes (25) und das dritte Element (32) eines zweiten Planetenradsatzes (26) drehfest miteinander in Verbindung stehen,
- **dass** eine Ausgangswelle des Mehrganggetriebes (16) drehfest mit dem zweiten Element (30) des zweiten Planetenradsatzes (26) verbunden ist,
- **dass** die erste Eingangswelle (23) über ein erstes Schaltelement (34) drehfest mit dem ersten Element (28) des zweiten Planetenradsatzes (26) verbindbar sowie mittels eines zweiten Schaltelements (35) drehfest mit der zweiten Eingangswelle (24) in Verbindung bringbar ist,
- **dass** das erste Element (28) des zweiten Planetenradsatzes (26) über ein drittes Schaltelement (36) festsetzbar sowie mittels eines vierten Schaltelements (37) drehfest mit der zweiten Eingangswelle (24) verbindbar ist,
- und **dass** zwei der Elemente (28, 30, 32) des zweiten Planetenradsatzes (26) über ein fünftes Schaltelement (38) drehfest miteinander in Verbindung bringbar sind.

10. Antriebseinheit (7; 58) nach Anspruch 9, **dadurch gekennzeichnet, dass** das erste Schaltelement (34) und das zweite Schaltelement (35) zu einer Schalteinrichtung (39) zusammengefasst sind, wobei diese Schalteinrichtung (39) eine Betätigungseinrichtung (40) aufweist, über welche zum einen das erste Schaltelement (34) sowie zum anderen das zweite Schaltelement (35) in einen jeweils betätigten Zustand überführbar ist.

11. Antriebseinheit (7; 58) nach Anspruch 9 oder 10, **dadurch gekennzeichnet, dass** das dritte Schaltelement (36), das vierte Schaltelement (37) und das fünfte Schaltelement (38) zu einer Schalteinrichtung (41) zusammengefasst sind, wobei diese Schalteinrichtung (41) eine Betätigungseinrichtung (42) aufweist, über welche das dritte Schaltelement (36), das vierte Schaltelement (37) oder das fünfte Schaltelement (38) in einen jeweils betätigten Zustand überführbar ist.

12. Antriebsstrang (2) für ein Elektrofahrzeug (1), insbesondere für ein geländegängiges Nutzfahrzeug, umfassend eine Antriebseinheit (7; 58) nach einem oder mehreren der Ansprüche 1 bis 11.

13. Antriebsstrang (2) nach Anspruch 12, **dadurch gekennzeichnet, dass** mit dem einen Abtrieb (9) der Verteilereinrichtung (17) der Antriebseinheit (7; 58) mindestens eine antreibbare Vorderachse (5) und mit dem anderen Abtrieb (10) der Verteilereinrichtung (17) der Antriebseinheit (7; 58) mindestens eine antreibbare Hinterachse (6) trieblich verbunden ist.

14. Elektrofahrzeug (1), insbesondere geländegängiges Nutzfahrzeug, umfassend einen Antriebsstrang (2) nach Anspruch 12 oder 13.
